# EUROPÄISCHE PATENTANMELDUNG

(11) **EP 1 013 599 A1**
(43) Veröffentlichungstag der Anmeldung: **28.06.2000**
(21) Anmeldenummer: 98811245.4
(22) Anmeldetag: 21.12.1998
(51) Int. Cl.: B66B 27/00, B66B 29/00

(54) **Sicherheitseinrichtung für eine Fahrtreppe oder einen Fahrsteig**

(71) Anmelder: INVENTIO AG, CH-6052 Hergiswil (CH)
(72) Erfinder: Blondiau, Dirk, 1170 Wien (AT); Wiesinger, Josef, 1100 Wien (AT)

(57) **Zusammenfassung**

Diese Sicherheitseinrichtung ist in der Form einer Ueberwachungseinrichtung für die Anbringung oder die Nachrüstung an einer Fahrtreppe (1) oder einem Fahrsteig zwecks Erkennung von Personen (1.4) und/oder Gegenständen im Ueberwachungsbereich ausgebildet, und kann unabhängig vom mechanischen System einer Fahrtreppe (1) oder eines Fahrsteiges eingebaut werden. Sie besteht aus Bildsensoren (2, 3, 4), einer Auswerteeinheit (5), einem PC (13) und den Signal- und Datenleitungen (9, 10, 14) zwischen den genannten Geräten. Mit einem Bildanalyseprogramm in der Auswerteeinheit (5) können aufgenommene Bilddaten nach verschiedenen Kriterien analysiert werden und entsprechende Daten und Steuersignale erzeugt werden. Als integrierender Bestandteil eines Gebäudetechniksystems können von dieser Ueberwachungseinrichtung verschiedene Ueberwachungsaufgaben übernommen werden.

## Beschreibung

Die vorliegende Sicherheitseinrichtung betrifft eine Ueberwachungseinrichtung für die Anbringung oder die Nachrüstung an einer Fahrtreppe oder einem Fahrsteig zwecks Erkennung von Personen und/oder Gegenständen im Ueberwachungsbereich, bestehend aus Sensoren und einer Auswerteeinrichtung.

Sicherheitseinrichtungen der genannten Art sind in verschiedenen Ausführungen als sogenannte Einschaltsperreinrichtung, bzw. Wiederbereitschaftsschaltung bekannt. Mittels einer solchen Sicherheitseinrichtung soll das Wiedereinschalten der Fahrtreppe nach einer willentlichen oder versehentlichen Betätigung des Nothaltschalters oder anderer sicherheitsbedingter Unterbrüche die nicht zurückgesetzt werden müssen so lange blockiert werden, bis sich keine Personen oder Gegenstände mehr im Erfassungsbereich der Sicherheitseinrichtung befinden.

Sicherheitseinrichtungen dieser Art sind aus der DE 195 41 410 und aus der DE 197 54 215 bekannt.

Die DE 195 41 410 offenbart eine Wiederbereitschaftsschalteinrichtung für Personenförderanlagen, welche die Personenförderanlage nach einer Betätigung der Not-Aus-Taste selbsttätig wieder in den Zustand der Einsatzbereitschaft versetzt. Die Einschalteinrichtung besteht im wesentlichen aus einer Vielzahl (bis 100) von in den Balustradensockeln eingebauten Sendern und Empfängern, welche eine Lichtschrankenkette bilden, sowie aus einer Auswerte- und Steuereinheit.

Für eine sichere Erfassung kleiner Gegenstände muss eine dichte Folge von Lichtschranken vorgesehen werden, was mit entsprechendem Aufwand für Material und Arbeit verbunden ist. Eine grosse Anzahl aktiver Elemente vergrössert zudem die Wahrscheinlichkeit eines Systemausfalls und erfordert einen beträchtlichen Unterhaltsaufwand.

Die DE 197 54 215 offenbart eine Fahrtreppe oder einen Fahrsteig mit einem Lichtschrankennetz und einer Wiederbereitschafteschaltung. An den Enden der Fahrtreppe oder des Fahrsteiges sind je eine Kontaktmatte und eine Anzahl Lichtschranken parallel angeordnet. Die Zone zwischen den Enden wird mit zur Fahrtrichtung schrägen Lichtschranken überwacht. Die Lichtschranken und Kontaktmatten sind mit der Auswerteschaltung verbunden.

Bei dieser Einrichtung muss für eine engmaschige Erfassung von Objekten auf einer durch Nothalt stillgesetzten Personenfördereinrichtung immer noch mit einem beträchtlichen Aufwand an Material und Arbeit gerechnet werden.

Bei beiden genannten und bekannten Lösungen ist zu berücksichtigen, dass ein nachträglicher Einbau der Einrichtung an einer bestehenden Fahrtreppe nur mit kaum vertretbarem Aufwand zu verwirklichen ist.

Der vorliegenden Erfindung liegt nun die Aufgabe zugrunde, eine Sicherheitseinrichtung der eingangs genannten Art zu schaffen, mittels welcher mit weniger Aufwand an Material und Arbeit bessere und mehr Resultate erreicht werden können.

Die erfindungsgemässe Sicherheitseinrichtung zeichnet sich dadurch aus, dass sie als ein von der Fahrtreppe oder dem Fahrsteig mechanisch unabhängige Einrichtung in der Form eines Bildsensorsystems mit Auswerteeinheit und PC ausgebildet ist, welches unabhängig von den Lichtverhältnissen kleine Objekte von wenigen Zentimetern Grösse noch eindeutig erkennt und signalisiert. Als eine von der Fahrtreppe oder dem Fahrsteig auch räumlich distanzierte und vom Benützer kaum erkennbare Einrichtung ist zudem eine hohe Vandalensicherheit gewährleistet. Ein nachträglicher Einbau der Ueberwachungseinrichtung bei einer Fahrtreppe oder einem Fahrsteig erfolgt ohne irgendwelchen Eingriff in die mechanische Konstruktion der Personenfördereinrichtung. Ferner ist die Einrichtung modulmässig aufgebaut und kann mit dieser Eigenschaft individuellen Bedürfnissen angepasst und beliebig ausgebaut werden.

Vorteilhafte Weiterbildungen und Verbesserungen sind in den Unteransprüchen aufgeführt.

Die Auswerteeinheit verarbeitet selbständig Bilddaten mittels eines Bildanalyseprogramms. Ferner enthält die Auswerteeinheit auch einen Interfaceteil mit Schalt- und Verstärkerfunktionen und weist Eingänge für Bildsensorsignale, eine Kommunikations-Schnittstelle für eine PC-Verbindung, Logikschaltkreise und einen Signalausgang für die Fahrtreppen- oder Fahrsteigsteuerung auf. An die Auswerteeinheit können mehrere Bildsensoren angeschlossen werden.

Der Bildanalyse ist das Prinzip des Vergleiches von digitalen Bilddaten zugrunde gelegt. Kleinste Abweichungen von vorgegebenen Normal-Bilddaten werden sofort erkannt und je nach Charakter der Abweichung entsprechend signalisiert und zu Steuersignalen verarbeitet. Damit ist eine schnelle, einfache und somit sichere Detektion von Objekten und Unregelmässigkeiten möglich.

Die Software für die Bildanalyse kann mit Zusatzmodulen ausgerüstet werden für Personenzählung mit statistischer Auswertung.

Die erfindungsgemässe Einrichtung ist selbstsicher ausgeführt. Ein durch Defekt ausfallender Bildsensors wird bereits von der Auswerteeinheit bemerkt und von dieser mit einem Störungssignal angezeigt.

Um den Ansprüchen an eine Sicherheitsschaltug zu genügen, wird die Auswertung redundant mit separarater Ueberwachung der einzelnen Verarbeitungskanäle ausgeführt.

Die Logikschaltkreise der Auswerteeinheit weisen Freigabe- und Blockierfunktionen auf, wobei die Freigabefunktion zusätzlich mit einer einstellbaren Verzögerungsfunktion versehen ist.

Der mit der Auswerteeinheit kommunizierende PC ist mit einer Software für Programmkonfiguration ausgerüstet. Mittels dem PC mit Monitor und Keybord kann die Software für die Bildanalyse in der Auswerteeinheit konfiguriert und optimal angepasst werden.

Mittels des Monitors des PC's kann die Situation auf und um die Personenfördereinrichtung visuell beobachtet und Missbrauch erkannt werden oder es können sogar allfällige verbrecherische Handlungen festgestellt werden. Der Anschluss eines Aufzeichnungsgerätes ist bei diesem Gebrauch der Einrichtung eine Selbstverständlichkeit.

Mit der erfindungsgemässen Einrichtung können ferner mit entsprechender Bildanalyse mechanische Defekte an der Personen-Fördereinrichtung erkannt und Störungssignale, falls nötig mit Nothaltfunktion, erzeugt werden. Hiermit können Funktionen von weiteren Sicherheits- und Ueberwachungseinrichtungen wie beispielsweise jene der Stufenüberwachung vom Bildsensorsystem übernommen werden. Dass hiermit beträchtliche Kosteneinsparungen möglich sind ist offensichtlich.

Mit den genannten Zusatztunktionen wird das erfindungsgemässe Bildsensorsysten zum kombiniertes Ueberwachungssystem an einer Personenfördereinrichtung.

Die Bildsensoren können bei Bedarf mit einer Infrarotleuchte mit unsichtbarem Licht kombiniert werden, um so auch bei Dunkelheit oder sehr schwachem Licht funktionsfähig zu sein.

Die Erfindung wird im folgenden anhand eines Ausführungsbeispiels näher erläutert und in den Zeichnungen dargestellt. Es zeigen:

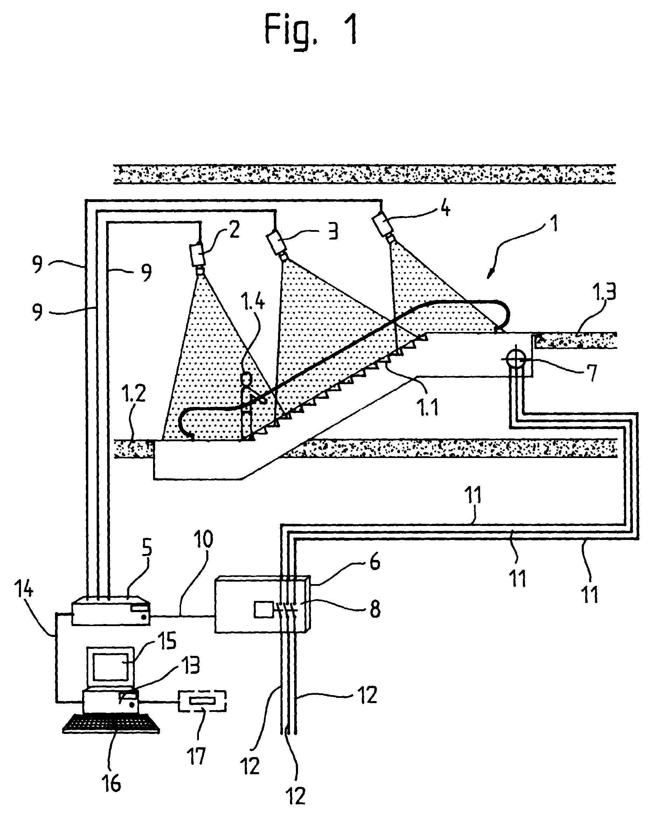

Fig.1 Eine Komplettdarstellung des Bildsensorsystems mit allen zugehörigen Komponenten.

Mit 1 ist eine Personenfördereinrichtung in der beispielhaften Form einer Fahrtreppe bezeichnet. Die Fahrtreppe 1 verbindet mit einem Stufenband 1.1 eine untere Ebene 1.2 mit einer oberen Ebene 1.3. Im Raum oberhalb der Fahrtreppe 1 sind Bildsensoren 2, 3 und 4 angeordnet, welche gemäss dem markierten Bilderfassungswinkel die ganze Fahrtreppe 1 mit beiden Zugängen bildmässig aufnehmen. Im Bereich des Bildsensors 2 befindet sich eine Person 1.4. Die Bildsensoren 2, 3 und 4 sind über Signalleitungen 9 mit einer Auswerteeinheit 5 verbunden. Eine Steuerleitung 10 verbindet die Auswerteeinheit 5 mit einer Fahrtreppensteuerung 6, welche nebst weiteren nicht dargestellten Steuerapparaten mindestens einen Motorschütz 8 enthält. Die Kontakte des Motorschützes 8 verbinden im geschlossenen Zustand eine Speiseleitung 12 des öffentlichen Netzes mit einer Motorzuleitung 11, welche zu einem Fahrtreppenmotor 7 am oberen Ende der Fahrtreppe 1 führt. Von der Auswerteeinheit 5 führt eine Datenleitung 14 zu einem, vorzugsweise in einem separaten Raum aufgestellten, PC 13 mit Monitor 15 und Keyboard 16. Als Option ist mit 17 ein Aufzeichnungsgerät 17 angedeutet. Anstelle eines PC's 13 kann auch ein Microcomputer in die Auswerteeinheit 5 integriert werden. Bei Bedarf kann zusätzlich ein Monitor zur visuellen Ueberwachung der Fahrtreppe 1 oder des Fahrsteiges aufgestellt werden. Der Mioroprozessor, bzw. der PC 13 können Programme zur automatischen Bilderkennung enthalten, die selbständig gefährliche Betriebszustände der Fahrtreppe 1 oder des Fahrsteiges erkennen und einen Notstop auslösen.

Die Funktion der erfindungsgemässen Einrichtung geht weitgehend aus der vorstehenden Figurenbeschreibung hervor. Durch den modulmässigen Aufbau sind beliebige Erweiterungen möglich. Die einzelnen Bildsensoren 2, 3 und 4 können so eingestellt werden, dass je ein scharf abgegrenzter Abschnitt der zu überwachenden Einrichtung erfasst wird. Vorzugsweise werden die zu überwachenden Abschnitte, wie Fig.1 zeigt, etwas überlappend eingestellt. Erfahrungsgemäss ist als häufigste Funktion der Ueberwachungseinrichtung die bis jetzt nicht explizit genannte gesperrte Wiedereinschaltung der Fahrtreppe 1 nach einem Nothaltunterbruch zu nennen. Die Wiedereinschaltung erfolgt jeweils erst, wenn sich mehrere Sekunden lang keine Personen und/oder Gegenstände auf der stillstehenden Fahrtreppe 1 befinden. Die vorstehende Lösung wird am Beispiel einer einzelnen Fahrtreppe 1 dargestellt. Da in einem Gebäude, beispielsweise Warenhaus, immer mehrere Fahrtreppen 1 installiert sind, können die ausgegebenen Steuersignale der Auswerteeinheiten 5 zusätzlich an eine zentrale nicht dargestellte Ueberwachungsstelle geleitet werden. Bei dieser zentralen Ueberwachungsstelle wird dann auch der PC 13 installiert, welcher über Datenleitungen 14 mit allen Auswerteeinheiten 5 Verbindung für Daten- und Bild-Kommunikation aufnehmen kann. In einem weiteren Ausbauschritt kann das Bildsensorsystem komplett in eine Haustechnikanlage integriert werden und so noch weitere Ueberwachungsaufgaben übernehmen. In einer solchen Einbindung in ein übergeordnetes System kann beispielsweise eine Personendetektion ausserhalb von Betriebszeiten aktiv sein oder die Bildsensoren können zusätzlich als Brandmelder vorgesehen werden. Die universelle Nutzung und die von der Fahrtreppenkonstruktion völlig unabhängige Nachrüstbarkeit sind die hervortretenden Vorteile dieser Ueberwachungseinrichtung.

## Patentansprüche

1. Sicherheitseinrichtung in der Form einer Ueberwachungseinrichtung für die Anbringung oder die Nachrüstung an einer Fahrtreppe (1) oder einem Fahrsteig zwecks Erkennung von Personen (1.4) und/oder Gegenständen im Ueberwachungsbereich, im wesentlichen bestehend aus Sensoren und einer Auswerteeinrichtung,
dadurch gekennzeichnet,
dass die Ueberwachungseinrichtung als ein von der zu überwachenden Fahrtreppe oder dem zu überwachenden Fahrsteig distanziertes und mechanisch unabhängiges Bildsensorsystem mit Bildsensoren (2, 3, 4) und Auswerteeinheit (5).

2. Ueberwachungseinrichtung nach Anspruch 1,
dadurch gekennzeichnet,
dass die Bildsensoren (2, 3, 4) für die bildmässige Erfassung abgegrenzter und teilweise überlappender Ueberwachungsbereiche ausgebildet sind.

3. Ueberwachungseinrichtung nach Anspruch 1,
dadurch gekennzeichnet,
dass die Auswerteeinheit (5) die Funktionsblöcke eines PC's mit Bildanalyseprogramm, einen Interfaceteil mit Schalt- und Verstärkerfunktionen, Logikschaltkreise, Bildsignaleingänge (9), eine Steuersignalverbindung (10) mit einer Fahrtreppen- oder Fahrsteigsteuerung (6) und eine Datenleitung (14) zu einem PC (13) aufweist.

4. Ueberwachungseinrichtung nach Anspruch 1,
dadurch gekennzeichnet,
dass das Bildanalyseprogramm Zusatzmodule für Personenzählung und -Ueberwachung, Stufenüberwachung, Brandmeldung und Defekterkennung aufweist.

5. Ueberwachungseinrichtung nach Anspruch 1,
dadurch gekennzeichnet,
dass die Bildsensoren mit Infrarotleuchten kombinierbar sind.

6. Ueberwachungseinrichtung nach Anspruch 1,
dadurch gekennzeichnet,
dass der PC (13) eine Software für die Konfiguration des Bildanalyseprogramms in der Auswerteeinheit (5) über eine Datenleitung (14) enthält.

7. Ueberwachungseinrichtung nach Anspruch 1,
dadurch gekennzeichnet,
dass dem Bildanalyseprogramm das Prinzip des Vergleiches von digitalen Bildaten eines Musterbildes mit jenen eines aktuell erfassten Bild zugrunde liegt.

8. Ueberwachungseinrichtung nach Anspruch 1,
dadurch gekennzeichnet,
dass das Bildsensorsystem als integrierender Bestandteil einer Haustechnikanlage ausgebildet ist.
